# EUROPÄISCHE PATENTSCHRIFT

(11) **EP 2 411 833 B1**
(45) Veröffentlichungstag und Bekanntmachung des Hinweises auf die Patenterteilung: **16.10.2013**
(21) Anmeldenummer: 10703247.6
(22) Anmeldetag: 27.01.2010
(51) Int. Cl.: G01S 7/481, G01S 7/51

(54) **DISPLAYHALTER FÜR EIN OPTISCHES MESSGERÄT**
DISPLAY HOLDER FOR AN OPTICAL MEASURING DEVICE
PORTE-ÉCRAN POUR UN APPAREIL DE MESURE OPTIQUE

(30) Priorität: 23.03.2009 DE 102009001727
(43) Veröffentlichungstag der Anmeldung: 01.02.2012
(73) Patentinhaber: Robert Bosch GmbH, 70442 Stuttgart (DE)
(72) Erfinder: WOLF, Peter, 70771 Leinfelden-Echterdingen (DE); SKULTETY-BETZ, Uwe, 70771 Leinfelden-Echterdingen (DE); STIERLE, Joerg, 71111 Waldenbuch (DE)
(86) Internationale Anmeldenummer: PCT/EP2010/050896
(87) Internationale Veröffentlichungsnummer: WO 2010/108708

(56) Entgegenhaltungen:
- EP-A1- 1 489 821
- DE-A1-102005 041 980
- DE-U1-202005 021 507
- JP-A- 10 153 457
- US-A1- 2005 110 976

## Beschreibung

Die vorliegende Erfindung betrifft ein Optikmodul für ein optisches Messgerät, insbesondere einen Laserentfernungsmesser mit einem Optikträger, einem Display und einem Displayhalter. Des weiteren betrifft die vorliegende Erfindung einen Displayhalter für ein solches Optikmodul sowie ein optisches Messgerät, das mit einem solchen Optikmodul ausgerüstet ist.

### Stand der Technik

Optische Messgeräte der vorbeschriebenen Art sind in unterschiedlichen Ausführungsformen bekannt und können insbesondere als Laserentfernungsmesser ausgebildet sein. Aus der DE 10 2005 041 980 A1 ist beispielsweise ein Laserentfernungsmesser bekannt, der als Handgerät ausgebildet ist. In dem Laserentfernungsmesser ist als zentrales Element ein Optikträger vorgesehen, an dem ein elektro-optisches Sende- und Empfangssystem gehalten ist. Dazu weist der Optikträger Aufnahmen und Befestigungsmittel für die optischen und/oder elektronischen Komponenten des Messgerätes auf. So ist an dem Frontbereich des Optikträgers einstückig ein Linsenhalter mit Aufnahmen für eine Empfangsoptik vorgesehen. Des weiteren ist an der Rückseite des Optikträgers eine Leiterplatte mit einer Laserdiode mit davor montierter Kollimationslinse zur Erzeugung eines Laserstrahls und einer lichtempflichlichen Empfangsdiode gehalten. Die Leiterplatte ist in dem Messgerät derart positioniert, dass die Laserdiode den Lichtstrahl durch die Sendeoptik abstrahlen kann und die lichtempfindliche Empfangsdiode im Brennpunkt der Empfangsoptik positioniert ist. Zur Verbesserung der Messgenauigkeit und zur Reduktion von Messfehlern sind die Lichtpfade für das Senden und Empfangen parallel angeordnet. Dadurch wirken sich äußere Einflüsse auf den Optikträger gleichermaßen auf die beiden Lichtpfade aus. Der Optiktrager mit dem daran fixierten elektro-optischen Sende- und Empfangssystem ist zusammen mit einer Anzeigevorrichtung, einer Eingabevorrichtung und einer Energieversorungsvorrichtung in einem gemeinsamen Gehäuse montiert. Im Betrieb erfolg die Betätigung des Laserentfemungsmessers durch die Eingabevorrichtung. Daraufhin wird von der Laserdiode ein Laserstrahl auf einen Gegenstand abgestrahlt, zu dem der Abstand gemessen werden soll. Der auf den Gegenstand projizierte Lichtpunkt wird über die Empfangsoptik auf die lichtempfliche Empfangsdiode gebündelt und ausgewertet Der durch die Messung gewonnene Abstandswert wird über die Anzeigevorrichtung ausgegeben.

Die Anzeigevorrichtung ist üblicherweise als Flüssigkristalldisplay ausgebildet und hinter einem Fenster an dem Gehäuse des Laserentfemungsmessers gehalten. Im täglichen Einsatz ist der Laserentfernungsmesser mechanischen Beanspruchungen zum Beispiel durch Stöße ausgesetzt, die zu einer Beschädigung des Displays führen können. Aus diesem Grund sind die Displays häufig in einen am Gehäuse des Messgerätes vorgesehenen Rahmen eingelegt. Führungen verhindern eine Verschiebung des Displays parallel zu der Fensterebene. Das Display ist im Rahmen auch von oben fixiert, wobei Federn vorgesehen sein können, die innerhalb des Rahmens eine Ausweichbewegung des Displays bei übermäßigem Druck zulassen. Diese Art der Halterung ist jedoch kompliziert und aufwendig.

Die US 2005/0110976 A1 offenbart einen Laserentfernungsmesser mit einem Gehäuse und einer im Gehäuse integrierten Zielsucheinrichtung. Ein Anwender schaut durch eine paralleles zu Messachse versetzte Optik durch das Gerät hindurch auf ein Zielobjekt hin. In die optische Visiereinrichtung werden dem Anwender die Messdaten eingespiegelt.

Die EP 1489821 offenbart ein modulares drahtloses Telefon mit austauschbaren Anzeige- und Eingabemodulen.

Die JP 10 153457 A offenbart ein Display mit einer schwenk- und rotierbaren U-förmigen Halterung.

Aufgabe der vorliegenden Erfindung ist es daher, ein Optikmodul, einen Dis-playhalter und ein optisches Messgerät bereitzustellen, die eine einfache Montage des Displays sicherstellen und einen effektiven Schutz gegen Beschädigungen bieten

### Offenbarung der Erfindung

Diese Aufgabe wird erfindungsgemäß dadurch gelöst, dass der Displayhalter und das Display so ausgebildet sind, dass sie den Optikträger zwischen seinen axialen Endbe-reichen umfassen, und korrespondierende Verbindungselemente aufweisen, durch welche sie lösbar miteinander verbunden sind.

Grundgedanke der vorliegenden Erfindung ist es also, den Einfluss von mechanischen Belastungen auf das Display dadurch zu reduzieren, dass es nicht am Gehäuse des Messgerätes gehalten ist, sondern an dem Optikträger. Dadurch werden mechanische Einflüsse, die üblicherweise über das Gehäuse auf das Messgerät einwirken, nicht direkt auf das Display übertragen. Da der Displayhalter und das Display eine Umfassung um den Optikträger bilden, wird dieser mit den daran gehaltenen Komponenten eines elektro-optischen Sende- und Empfangssystems vor Beschädigungen durch mechanische Einflüsse geschützt.

Erfindungsgemäß weist der Displayhalter einen im Wesentlichen U-förmigen Querschnitt auf und ist das Display mit den freien Enden der Schenkel des Displayhalters verbunden. Der U-förmige Querschnitt ist für die Umfassung des Optikträgers gut geeignet, und eine Verbindung mit dem Display kann an den freien Endes der Schenkel leicht hergestellt werden. Wenn sich die Schenkel des Displayhalters bis zur Oberseite des Optikträgers erstrecken, kann ein ebenes Display auf einfache Weise an dem Displayhalter fixiert werden, um die Umfassung des Optikträgers zu bilden.

Alternativ oder zusätzlich kann auch das Display einen im Wesentlichen U-förmigen Querschnitt aufweisen, wobei dann der Displayhalter mit den freien Enden der Schenkel des Displays verbunden ist.

Die Verbindungselemente können zweckmäßigerweise zur Herstellung einer Rast- oder Clipsverbindung ausgebildet sein, so dass bei der Montage keine zusätzlichen Befestigungsmittel oder Werkzeuge erforderlich sind.

Erfindungsgemäß ist der Displayhalter in seinem Verbindungsbereich elastisch ausgebildet. Die Verbindungselemente sind an elastischen Armen, die an den freien Enden der U-Schenkel des Displayhalters ausgebildet sind, vorgesehen. Alternativ oder zusätzlich können die U-Schenkel des Displays und/oder des Displayhalters insgesamt elastisch ausgebildet sein und insbesondere aus einem elastischen Kunststoff bestehen. Die elastische Ausbildung bildet dabei einen zusätzlichen Schutz für das Display, da auf das Messgerät wirkende Kräfte über die elastische Verbindung nur abgeschwächt auf das Display übertragen werden. Außerdem können durch die elastische Ausbildung auch Fertigungstolleranzen ausgeglichen werden.

Zusätzlich können an dem Optikträger einerseits sowie dem Displayhalter und/oder dem Display andererseits korrespondierende Vorsprünge und Aussparungen vorgesehen sein, die miteinander in Eingriff stehen, um den Displayhalter mit dem Display an dem Optikträger zu fixieren. Somit kann auf einfache Weise eine Position vorgegeben werden, in der die Anordnung aus Displayhalter und Display an dem Optikträger fixiert wird. An dem so positionierten Displayhalter kann in einem weiteren Montageschritt das Display angebracht werden, um die Umfassung für den Optikträger zu vervollständigen.

In weiterer Ausgestaltung der Erfindung kann vorgesehen sein, dass an einer Frontplatte des Optikträgers eine Gummimanschette gehalten ist, wobei an der Gummimanschette einerseits sowie dem Displayhalter und/oder dem Display andererseits korrespondierende Verbindungselemente vorgesehen sind, mit denen die Gummimanschette an dem Displayhalter und/oder dem Display gehalten ist. Durch die Gummimanschette kann in an sich bekannter Weise die Einsatzöffnung des Gehäuses abgedichtet werden. Dabei können die Verbindungselemente so ausgebildet sein, dass eine Montage ohne zusätzliche Hilfsmittel möglich ist.

Hinsichtlich weiterer Ausgestaltungen der Erfindung wird auf die Unteransprüche sowie die nachfolgende Beschreibung eines Ausführungsbeispiels unter Bezugnahme auf die beiliegende Zeichnung verwiesen. In der Zeichnung zeigt:
- Figur 1: einen erfindungsgemäßen Laserentfernungsmesser mit einem Gehäuse und einem Optikmodul in perspektivischer Ansicht,
- Figur 2: das Optikmodul aus Figur 1 in Explosionsdarstellung,

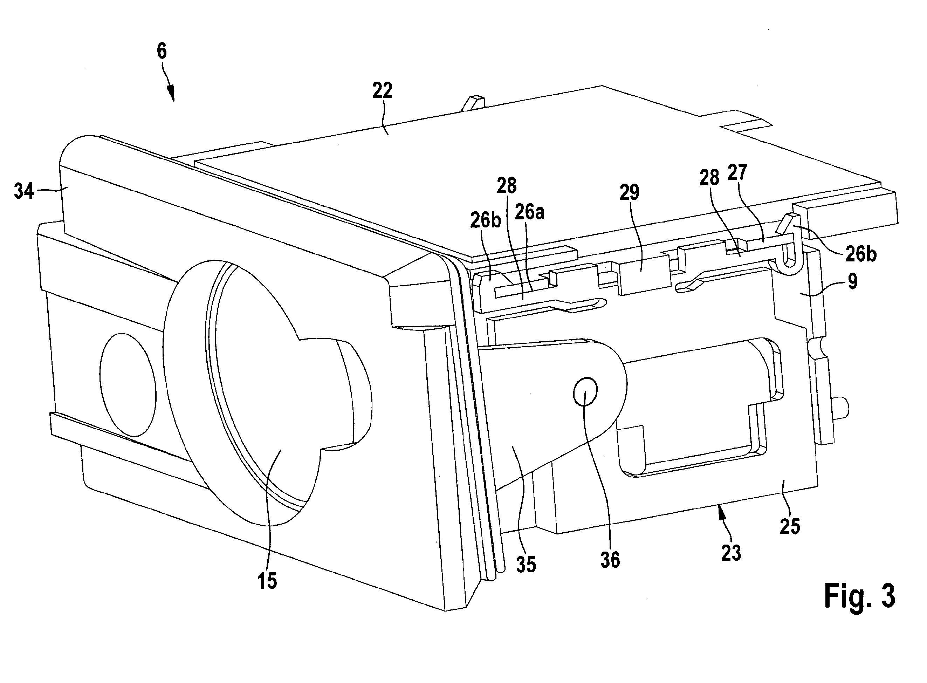

- Figur 3: das Optikmodul aus Figur 1 im montierten Zustand in perspektivischer Ansicht,

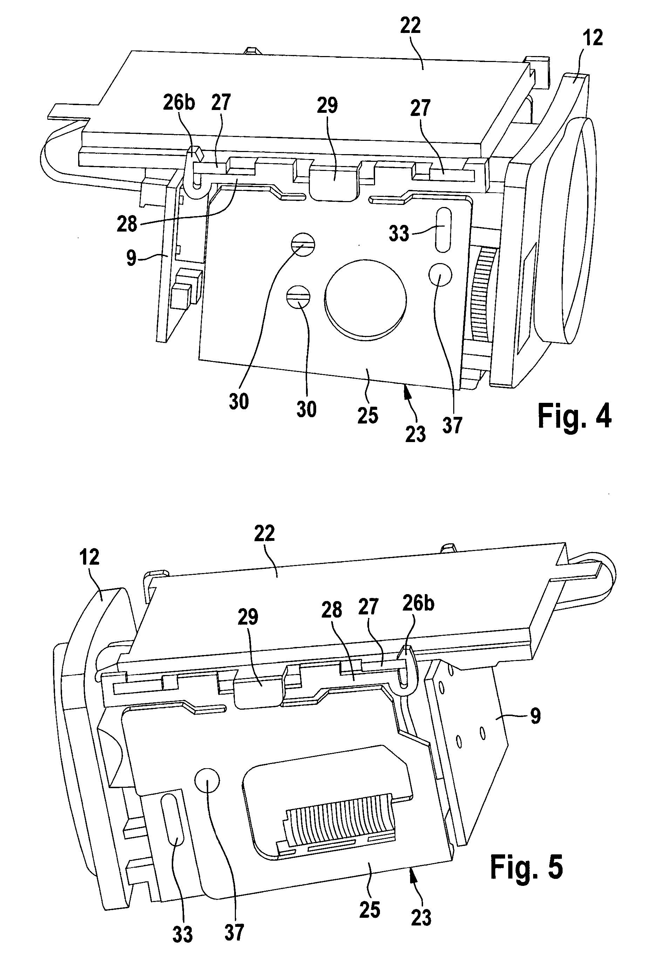

- Figur 4: das Optikmodul aus Figur 1 ohne Gummimanschette in seitlicher Ansicht,
- Figur 5: das Optikmodul aus Figur 4 von der gegenüberliegenden Seite,

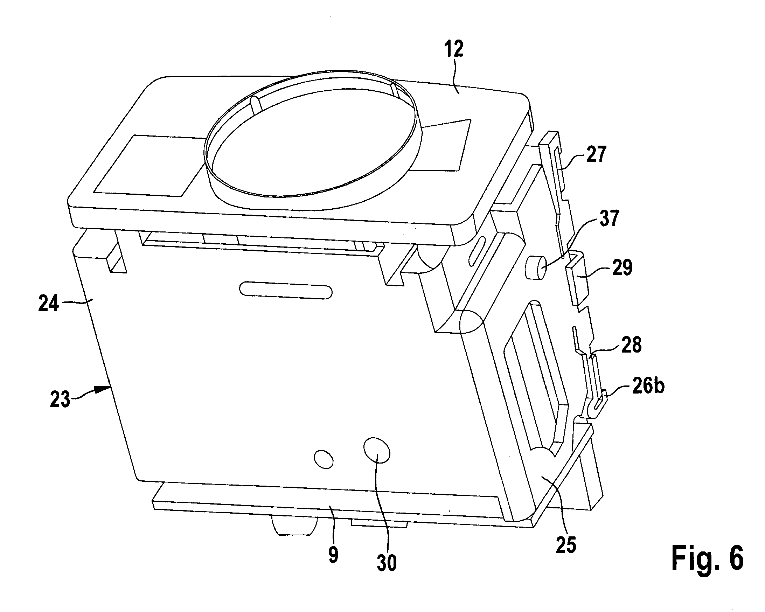

- Figur 6: das Optikmodul aus Figur 4 in einer Ansicht von schräg unten.

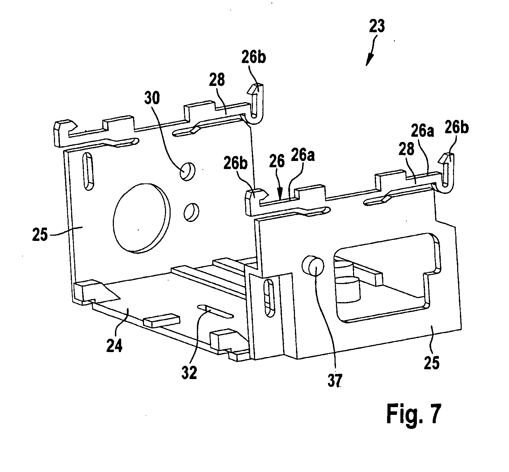

- Figur 7: einen Displayhalter des Optikmoduls aus Figur 1 in perspektivischer Ansicht,

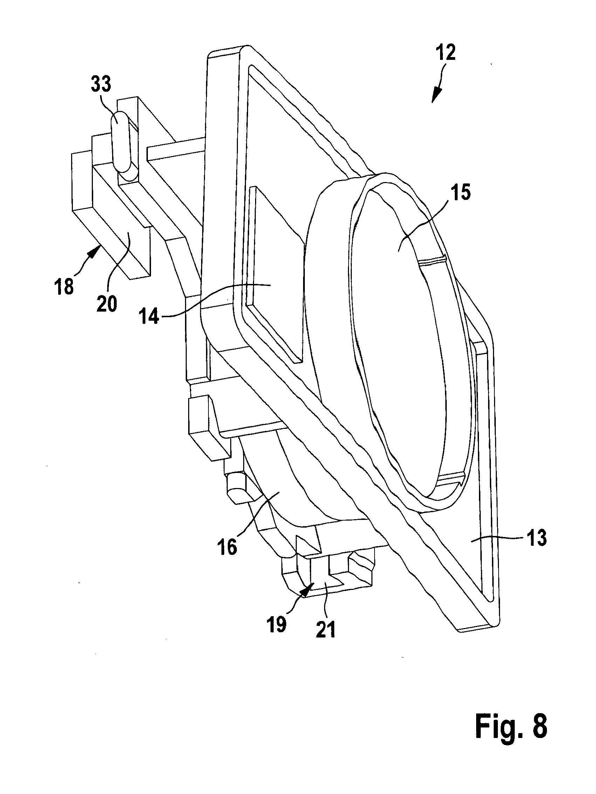

- Figur 8: einen Linsenhalter des Optikmoduls aus Figur 1 in perspektivischer Ansicht von schräg oben, und

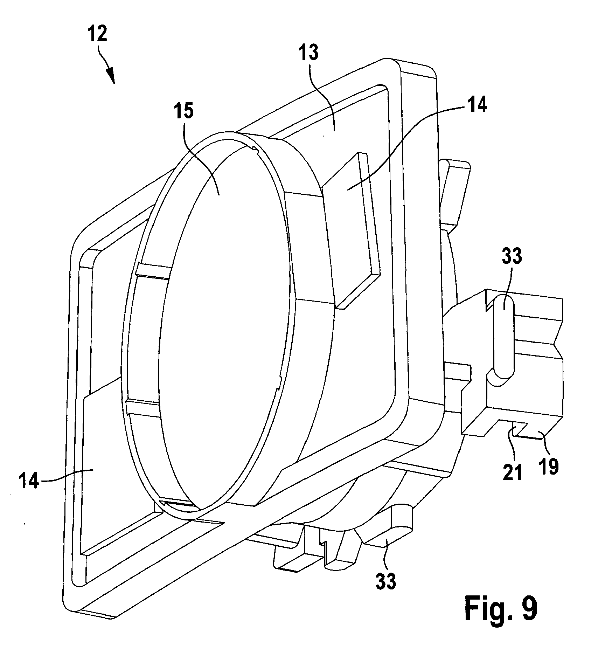

- Figur 9: den Linsenhalter aus Figur 8 in perspektivischer Ansicht von schräg unten.

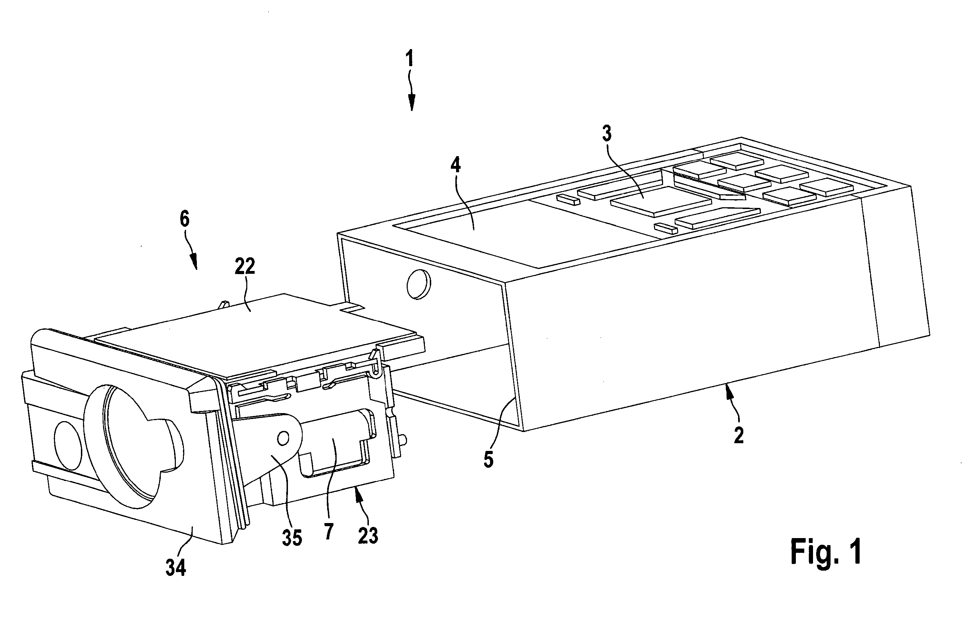

In der Figur 1 ist ein Laserentfernungsmessgerät 1 gemäß der vorliegenden Erfindung dargestellt. Das Laserentfernungsmessgerät 1 umfasst ein Gehäuse 2, das an seiner Oberseite eine Bedieneinrichtung 3 und ein Sichtfenster 4 aufweist. Weiterhin gehört zu dem Messgerät 1 ein Optikmodul 6, das in das Gehäuse 2 durch dessen offene Stirnseite 5 eingesetzt wird.

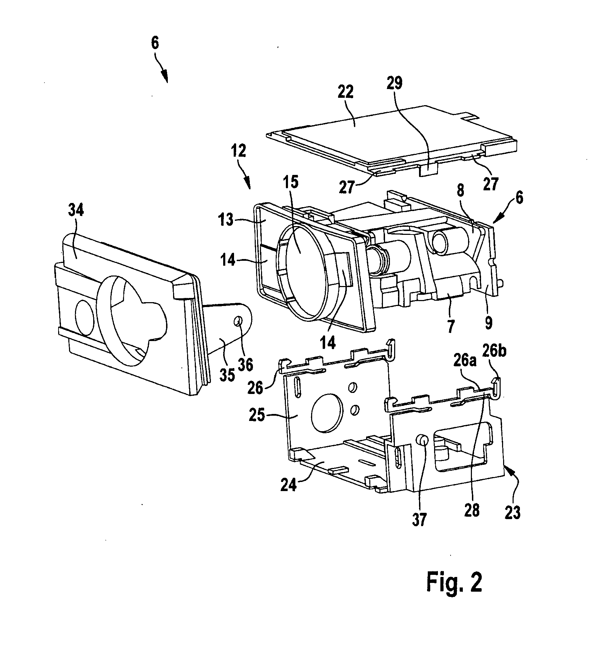

Das Optikmodul 6 ist im Einzelnen in den Figuren 1 und 2 dargestellt und umfasst als zentrales Element einen Optikträger 7, der dazu dient, die optischen und elektronischen Komponenten des Messgerätes zu halten und hierfür entsprechende Befestigungsmittel und Aufnahmen aufweist. So besitzt der Optikträger 7 an seiner Rückseite einen Befestigungsflansch 8, an welchem eine Leiterplatte 9 angebracht ist, die eine Laserdiode zur Erzeugung eines Laserstrahls und eine lichtempflichliche Empfangsdiode trägt. Des weiteren sind in dem Befestigungsflansch 8 mehrere Öffnungen vorgesehen, durch welche die optischen Komponenten an der Leiterplatte 9 Licht in Richtung der Vorderseite des Optikträgers 7 senden bzw. eingehendes Licht empfangen können.

An der Vorderseite des Optikträgers 7 ist ein Verbindungsflansch vorgesehen, der im Wesentlichen zur Anbringung eines Linsenhalters 12 dient. Der Linsenhalter 12 umfasst eine Frontplatte 13, die zwei seitliche Austrittsscheiben 14 und eine Linsenaufnahme 15 aufweist. Die kleinere, in Figur 2 rechte Austrittsscheibe 14 stellt den Austritt für einen Laserstrahl dar, während die größere, linke Austrittsscheibe 14 ein Fenster für eine integrierte Zieloptik bildet. Die zentrale Linsenaufnahme 15 dient zur Befestigung einer Empfangslinse und ist von einem in Richtung des Optikträgers 7 nach hinten abragenden tubusförmigen Fortsatz 16 umgeben, der eine Abschirmung bildet und im montierten Zustand an dem Verbindungsflansch des Optikträgers 7 anliegt.

An etwa diametral gegenüberliegenden Seiten des Tubus 16 sind an der Rückseite der Frontplatte 13 zwei Befestigungselemente 18, 19 vorgesehen, über welche der Linsenhalter 12 mit dem Verbindungsflansch des Optikträgers 7 verbunden ist. Die Befestigungselemente 18, 19 sind so ausgebildet, dass sie auf den Verbindungsflansch des Optikträgers 7 gesteckt und dann mit diesem verklebt werden können. Dazu weisen die Befestigungselemente 18, 19 entsprechende Aussparungen 20, 21 auf, über welche sie auf den Verbindungsflansch geschoben werden können.

Zu dem Optikmodul 6 gehört des weiteren ein Display 22, das an der Oberseite des Optikträgers 7 angeordnet und an diesem durch einen Displayhalter 23 fixiert ist. Bei dem Displayhalter 23 handelt es sich um ein Bauteil mit einem im Wesentlichen U-förmigen Querschnitt, der aus einem elastischen Kunststoff besteht. Der Displayhalter 23 besitzt eine Bodenplatte 24, welche an der Unterseite des Optikträgers 7 platziert ist, und zwei Seitenwände 25, welche von der Bodenplatte 24 aufrecht abragen und sich an den gegenüberliegenden Seiten des Optikträgers 7 in Richtung des Displays 22 erstrecken.

An ihren freien Enden sind die beiden Seitenwände 25 durch Rast- oder Clipsverbindungen mit dem Display 22 lösbar verbunden. Hierzu sind an den seitlichen Rändern des Displays 22 sowie an den oberen Randbereichen der beiden Seitenwände 25 des Displayhalters 23 zueinander korrespondierende und miteinander in Eingriff bringbare Verbindungselemente 26, 27 vorgesehen. Konkret sind an den oberen Rändern der beiden Seitenwände 25 des Displayhalters 23 jeweils zwei Haltearme 28 ausgebildet, die mit den Seitenwänden 25 in deren Mittelbereich elastisch verbunden sind und sich parallel zu den Seitenwänden 25 nach außen erstrecken. An der Oberseite der Haltearme 28 ist jeweils eine Ausnehmung 26a mit einer dieser zugeordneten Rastnase 26b vorgesehen, in welche ein korrespondierend ausgebildeter Randbereich 27 des Displayhalters 23 eingeclipst werden kann. Zur Positionierung des Displays 22 an dem Displayhalter 23 weist das Display 22 an seinen Längsseiten nach unten abragende Anschlagelemente 29 auf, die seitlich über die Seitenwände 25 des Displayhalters 23 greifen.

Der Displayhalter 23 weist weiterhin eine Mehrzahl Bohrungen 30 für die optionale Befestigung weiterer Zubehörteile wie zum Beispiel eines Bluetoothmoduls auf. Zusätzlich sind an dem Displayhalter 23 drei Längsschlitze 32 vorgesehen, in welche korrespondierende Stege 33 des Linsenhalters 12 eingreifen. Dadurch wird der Displayhalter 23 an dem Optikträger 7 und dem Linsenhalter 12 in einer vorgegebenen Position fixiert.

Das Optikmodul 6 umfasst ferner eine Gummimanschette 34, die den Linsenhalter 12 an seiner Außenseite überdeckt. An den Querseiten der Gummimanschette 34 sind Befestigungslaschen 35 vorgesehen, die ein Durchgangsloch 36 aufweisen. An den Seitenwänden 25 des Displayhalters 23 sind korrespondierende Vorsprünge 37 vorgesehen, auf welche die Befestigungslaschen 35 gesteckt werden können, um die Gummimanschette 34 an dem Displayhalter 23 zu montieren.

Im Betrieb wirken mechanische Belastungen auf das Laserentfernungsmessgerät 1. Diese werden durch den elastischen Displayhalter 23 abgefedert, so dass der Optikträger 2 mit den daran gehaltenen elektro-optischen Komponenten nur geringen Belastungen ausgesetzt wird. Außerdem werden über die federnden Haltearme 28 die Belastungen, welche auf den Optikträger 7 wirken, nur abgefedert an das Display 22 übertragen. Die Haltearme 28 erlauben dabei eine elastische Bewegung des Displays 22, wobei die Bewegung quer zu den Längsseiten durch die Anschlagelemente 29 begrenzt wird.

## Patentansprüche

1. Displayhalter (23) zur Anbringung eines Displays (22) an einem Optikträger eines optischen Messgerätes (1), insbesondere eines Laserentfernungsmessers, **dadurch gekennzeichnet, dass** der Displayhalter einen im Wesentlichen U-förmigen Querschnitt zur Umfassung des Optikträgers aufweist und an seinen freien Enden Verbindungselemente (26) zur lösbaren Anbringung eines Displays (22) aufweist, wobei die Verbindungselemente (26) an elastischen Armen (28), die an den freien U-Schenkeln (25) des Displayhalters (23) ausgebildet sind, vorgesehen sind.

2. Displayhalter nach Anspruch 1, **dadurch gekennzeichnet, dass** die Verbindungselemente (26) zur Herstellung einer Rast- oder Clipsverbindung ausgebildet sind.

3. Displayhalter nach einem der Ansprüche 1 bis 2, **dadurch gekennzeichnet, dass** die U-Schenkel (25) des Displayhalters (23) elastisch ausgeführt sind und insbesondere der Displayhalter (23) aus einem elastischen Kunststoff besteht.

4. Displayhalter nach Anspruch 1, **dadurch gekennzeichnet, dass** er Verbindungsmittel insbesondere in Form von Aussparungen zur Anbringung (30) an dem Optikträger (7) aufweist.

5. Displayhalters nach einem der Ansprüche 1 bis 4, **dadurch gekennzeichnet, dass** er Befestigungsmittel (37) zur Anbringung einer Gummimanschette (34) aufweist.

6. Displayhalter nach einem der Ansprüche 1 bis 5, **dadurch gekennzeichnet, dass** der Displayhalter (23) Befestigungsmittel zur Verbindung mit einem Gehäuse eines optischen Messgerätes aufweist, wobei die Befestigungsmittel eine Einstellvorrichtung umfassen, mit welcher der Displayhalter (23) zu dem Gehäuse positionierbar ist.

7. Optikmodul für ein optisches Messgerät, insbesondere für einen Laserentfernungsmesser, mit einem Optikträger (7), einem Display (22) und einem Displayhalter (23) nach einem der Ansprüche 1 bis 6, **dadurch gekennzeichnet, dass** der Displayhalter (23) und das Display (22) so ausgebildet sind, dass sie den Optikträger (7) zwischen seinen axialen Endbereichen umfassen, wobei das Display (22) zu den Verbindungselementen (26) des Displayhalters (23) korrespondierende Verbindungselemente (27) aufweist, durch welche Displayhalter (23) und Display (22) lösbar miteinander verbunden sind.

8. Optisches Messgerät, insbesondere ein Laserentfernungsmesser, mit einem Gehäuse (2), einem Optikträger (7) und einem Display (22), **dadurch gekennzeichnet, dass** der Optikträger (7) mit dem Display (22) und einem Displayhalter (23) zu einem Optikmodul (6) gemäß Anspruch 7 verbunden und in das Gehäuse (2) eingesetzt ist.

## Claims

1. Display holder (23) for mounting a display (22) on an optical-system support of an optical measuring device (1), in particular of a laser rangefinder, **characterized in that** the display holder has a substantially U-shaped cross section for enclosing the optical-system support and has at its free ends connecting elements (26) for detachably mounting a display (22), the connecting elements (26) being provided on elastic arms (28) which are formed on the free U-limbs (25) of the display holder (23).

2. Display holder according to Claim 1, **characterized in that** the connecting elements (26) are designed to produce a latching or clip connection.

3. Display holder according to one of Claims 1 to 2, **characterized in that** the U-limbs (25) of the display holder (23) are of elastic design and, in particular, the display holder (23) consists of an elastic plastic.

4. Display holder according to Claim 1, **characterized in that** it has connecting means, in particular in the form of cutouts (30) for mounting on the optical-system support (7).

5. Display holder according to one of Claims 1 to 4, **characterized in that** it has fastening means (37) for mounting a rubber sleeve (34).

6. Display holder according to one of Claims 1 to 5, **characterized in that** the display holder (23) has fastening means for connecting to a housing of an optical measuring device, the fastening means comprising a setting device with the aid of which the display holder (23) can be positioned relative to the housing.

7. Optical module for an optical measuring device, in particular for a laser rangefinder, having an optical-system support (7), a display (22) and a display holder (23) according to one of Claims 1 to 6, **characterized in that** the display holder (23) and the display (22) are designed such that they enclose the optical-system support (7) between its axial end regions, the display (22) having connecting elements (27) which correspond to the connecting elements (26) of the display holder (23) and connecting the display holder (23) and display (22) detachably to one another.

8. Optical measuring device, in particular a laser rangefinder, having a housing (2), an optical-system support (7) and a display (22), **characterized in that** the optical-system support (7) is connected to the display (22) and to a display holder (23) to form an optical module (6) according to Claim 7 and is inserted into the housing (2).

## Revendications

1. Porte-écran (23) permettant d'ajouter un écran (22) à un support optique d'appareil de mesure optique (1), notamment de système de mesure de distance par laser, **caractérisé en ce que** le porte-écran comporte une section transversale pour l'essentiel en forme de U permettant d'entourer le support optique et des éléments de liaison (26) disposés au niveau de ses extrémités libres permettant d'ajouter de façon amovible un écran (22), les éléments de liaison (26) étant prévus au niveau des bras élastiques (28) réalisés au niveaux des barres de U (25) libres du porte-écran (23).

2. Porte-écran selon la revendication 1, **caractérisé en ce que** les éléments de liaison (26) sont réalisés de façon à établir une liaison par encliquetage ou clipsage.

3. Porte-écran selon l'une quelconque des revendications 1 à 2, **caractérisé en ce que** les barres de U (25) du porte-écran (23) sont réalisées de façon élastique et notamment que le porte-écran (23) se compose d'une matière plastique élastique.

4. Porte-écran selon la revendication 1, **caractérisé en ce qu'**il comporte des moyens de liaison, notamment sous la forme d'évidements (30) permettant de l'ajouter au niveau du support optique (7).

5. Porte-écran selon l'une quelconque des revendications 1 à 4, **caractérisé en ce qu'**il comporte des moyens de fixation (37) permettant d'ajouter une coupelle en caoutchouc (34).

6. Porte-écran selon l'une quelconque des revendications 1 à 5, **caractérisé en ce que** le porte-écran (23) comporte des moyens de fixation pouvant être reliés à un carter d'un appareil de mesure optique, les moyens de fixation comprenant un dispositif de réglage à l'aide duquel le porte-écran (23) peut être positionné par rapport au carter.

7. Module optique pour un appareil de mesure optique, notamment pour un système de mesure de distance par laser, avec un support optique (7), un écran (22) et un porte-écran (23) selon l'une quelconque des revendications 1 à 6, **caractérisé en ce que** le porte-écran (23) et l'écran (22) sont réalisés de telle sorte qu'ils englobent le support optique (7) entre leurs zones d'extrémité axiales, l'écran (22) comportant des éléments de liaison (27) correspondant aux éléments de liaison (26) du porte-écran (23) à l'aide desquels le porte-écran (23) et l'écran (22) sont reliés l'un à l'autre.

8. Appareil de mesure optique, notamment système de mesure de distance par laser, avec un carter (2), un support optique (7) et un écran (22), **caractérisé en ce que** le support optique (7) est relié à un écran (22) et à un porte-écran (23) relié à un module optique (6) selon la revendication 7 et inséré dans le carter (2).
